# FASCICULE DE BREVET EUROPEEN

(11) **EP 0 893 641 B1**
(45) Date de publication et mention de la délivrance du brevet: **15.09.2004**
(21) Numéro de dépôt: 98470015.3
(22) Date de dépôt: 13.07.1998
(51) Int. Cl.: F16L 23/024, F16L 23/028

(54) **Dispositif pour l'assemblage de deux éléments de canalisation, et assemblages d'éléments de canalisation en comportant application**
Vorrichtung zum Verbinden von zwei Rohrstücken und Anwendung der Verbindung von Rohrstücken
Device for connecting two pipe elements and use of such a pipe element connection device

(30) Priorité: 25.07.1997 FR 9709518
(43) Date de publication de la demande: 27.01.1999
(73) Titulaire: SAINT-GOBAIN PAM, 54000 Nancy (FR)
(72) Inventeur: Vitel, Jean-Pierre, 54470 Thiaucourt-Regnieville (FR); Favier, Noel, 54380 Dieulouard (FR); Schneider, André, 54700 Pont-à-Mousson (FR); Lescot, Didier, 54200 Toul (FR); Bourgin, René, 54700 Montauville (FR)
(74) Mandataire: Puit, Thierry

(56) Documents cités:
- EP-A- 0 794 378
- DE-A- 2 010 020
- DE-C- 19 525 157
- FR-A- 1 555 582
- FR-A- 2 357 810
- GB-A- 2 057 616

## Description

La présente invention concerne un dispositif pour l'assemblage d'un bout uni et d'une bride de deux éléments de canalisation, comprenant une garniture d'étanchéité annulaire à compression axiale en élastomère, cette garniture comprenant un corps d'appui contre une contrebride de compression de la garniture et, à l'avant de ce corps et solidaire de celui-ci, un talon d'appui contre la bride, une surface radialement extérieure du corps étant destinée à prendre appui sur une surface de réaction de la contrebride, une surface radialement intérieure du corps étant destinée à prendre appui sur la surface radialement extérieure du bout uni, et une surface d'extrémité avant du talon étant destinée à prendre appui sur la bride pour assurer l'étanchéité de l'assemblage des deux éléments de canalisation.

Les mots « avant » et « arrière » s'entendent par rapport au sens de déplacement de la contrebride lors de la mise en compression de la garniture.

Un tel dispositif (voir, par exemple, le document FR-A-1555 582) est utilisé pour l'assemblage de tuyaux, notamment en fonte ductile, ou pour l'assemblage d'un tuyau avec un appareil de robinetterie tel qu'un robinet vanne. Pour un tel assemblage, on enfile généralement la contrebride puis le dispositif sur l'extrémité avant du bout uni d'un premier tuyau, et l'on approche ce bout uni de la bride d'un deuxième tuyau ou d'un appareil de robinetterie. La contrebride est généralement reliée à la bride par des boulons qui permettent, par serrage, de rapprocher la contrebride de la bride et ainsi d'assurer la mise en compression de la garniture. Le corps de la garniture vient alors se loger dans une chambre annulaire de compression délimitée par la surface de réaction de la contrebride et la surface radialement extérieure du bout uni.

La garniture d'étanchéité doit pouvoir assurer sa fonction aussi bien dans le cas où le jeu radial entre la contrebride et le bout uni et/ou le jeu axial entre le bout uni et la bride sont substantiels, que dans le cas où l'un ou ces deux jeux sont minimaux, afin de pouvoir s'adapter aux différentes configurations généralement rencontrées.

Cependant, ces exigences sont peu compatibles. En effet, dans le premier cas, l'espace disponible pour l'expansion de l'élastomère de la garniture comprimée est relativement important. Par suite, celle-ci doit avoir des dimensions suffisantes pour pouvoir assurer sa fonction. Or, dans le second cas, l'espace disponible pour l'expansion de l'élastomère de cette même garniture comprimée est beaucoup plus faible. On constate alors très fréquemment, en particulier à jeu radial minimal, un mauvais positionnement de la garniture lors de sa mise en compression, notamment entre le talon et la bride, qui conduit à des défauts d'étanchéité.

Pour un assemblage verrouillé entre deux éléments de canalisation, des inserts sont généralement prévus dans un tronçon d'extrémité arrière du corps, chaque insert présentant une surface radialement intérieure dont un relief d'accrochage est destiné à prendre appui sur la surface radialement extérieure du bout uni du premier tuyau pour verrouiller l'assemblage des deux éléments de canalisation.

A jeu minimal, notamment à jeu radial minimal, on observe également des problèmes de positionnement de la garniture d'un tel dispositif avec, par exemple, l'apparition de bourrelets d'expansion de l'élastomère à l'extérieur de la contrebride, en arrière de celle-ci, et/ou avec des phénomènes d'ondulation de l'élastomère autour des inserts, qui peuvent conduire à des défauts d'étanchéité de l'assemblage des deux éléments de canalisation.

La présente invention a pour but de résoudre les problèmes mentionnés précédemment et, en particulier, de foumir un dispositif à garniture d'étanchéité facile à monter et à démonter, d'encombrement réduit, de faible coût et assurant une bonne étanchéité d'un assemblage d'éléments de canalisation dans une large plage de jeux entre les pièces de l'assemblage, notamment à jeu radial minimal entre la contrebride et le bout uni de l'assemblage, et jusqu'à des pressions relativement élevées, par exemple de 16 bars.

A cet effet, l'invention a pour objet un dispositif pour l'assemblage d'un bout uni et d'une bride de deux éléments de canalisation selon la revendication 1.

Selon des modes particuliers de réalisation, le dispositif peut comprendre l'une ou plusieurs des caractéristiques suivantes :
- l'évidement est un évidement annulaire ménagé sur la surface radialement intérieure ou sur la surface radialement extérieure du corps ;
- l'évidement est ménagé sur la surface radialement intérieure du corps, cet évidement définissant une cavité refermée au moins partiellement par une partie de la garniture formant une lèvre annulaire, et le dispositif comprend un organe de maintien de la lèvre sur la surface radialement extérieure du bout uni, cet organe étant logé dans ladite cavité ;
- ledit organe de maintien est un jonc torique fendu ;
- l'évidement est ménagé sur la surface radialement intérieure du corps, au moins un autre évidement annulaire est ménagé sur la surface radialement extérieure du corps, et en ce que ces deux évidements sont décalés axialement l'un par rapport à l'autre ;
- Notamment, l'anneau rigide est métallique.
- la surface radialement extérieure du corps a une forme générale convergente vers l'extrémité arrière de la gamiture ;
- une partie avant de la surface radialement extérieure du corps, dépourvue d'évidement, diverge vers l'avant, cette partie étant destinée à prendre appui contre une partie correspondante de la surface de réaction de la contrebride lors de la mise en compression de la gamiture ;
- au moins deux parties de la surface radialement extérieure du corps, dépourvues d'évidemment, divergent vers l'avant, respectivement une partie arrière et ladite partie avant, et ladite partie avant diverge plus fortement que la partie arrière, ces deux parties étant destinées à prendre appui contre des parties correspondantes de la surface de réaction de la contrebride lors de la mise en compression de la gamiture ;
- la surface radialement intérieure du talon présente au moins deux saillies radiales formant des taquets de positionnement axial du dispositif sur le bout uni, ces taquets étant destinés à venir en butée contre l'extrémité axiale du bout uni avant la mise en compression de la garniture ;
- le dispositif comprend au moins deux inserts métalliques de blocage, disposés dans un tronçon d'extrémité arrière du corps, chaque insert présentant une surface radialement intérieure dont un relief d'accrochage est destiné à prendre appui sur la surface radialement extérieure du bout uni pour verrouiller l'assemblage des deux éléments de canalisation lors de la mise en compression de la garniture ;
- au moins un évidement frontal arrière d'expansion de l'élastomère de la garniture comprimée est ménagé entre les inserts dans une surface d'extrémité arrière du corps ; et
- au moins un insert de blocage présente sur une surface radialement extérieure une saillie sensiblement radiale, cette saillie étant destinée à coopérer avec une partie de butée sensiblement radiale de la surface de réaction de la contrebride pour limiter le déplacement radial de l'insert lors de la mise en compression de la garniture.

L'invention a également pour objet un assemblage étanche d'éléments de canalisation, notamment de tuyaux, comprenant un bout uni d'un premier élément de canalisation, une bride d'un second élément de canalisation, et une contrebride entourant le bout uni et solidaire de la bride, caractérisé en ce qu'il comprend un dispositif tel que défini ci-dessus, ladite surface radialement extérieure du corps prenant appui sur une surface de réaction de la contrebride, ladite surface radialement intérieure du corps prenant appui sur la surface radialement extérieure du bout uni, et ladite surface d'extrémité avant du talon prenant appui sur la bride en assurant l'étanchéité de l'assemblage des deux éléments de canalisation.

L'invention a finalement pour objet un assemblage étanche et verrouillé d'éléments de canalisation, notamment de tuyaux, comprenant un bout uni d'un premier élément de canalisation, une bride d'un second élément de canalisation, et une contrebride entourant le bout uni et solidaire de la bride, caractérisé en ce qu'il comprend un dispositif tel que défini ci-dessus, ladite surface radiatement extérieure de la garniture prenant appui sur une surface de réaction inclinée de la contrebride, ladite surface radialement intérieure du corps ainsi que les reliefs d'accrochage des inserts prenant appui sur la surface radialement extérieure du bout uni, et ladite surface d'extrémité avant du talon prenant appui sur la bride en assurant l'étanchéité et le verrouillage de l'assemblage des deux éléments de canalisation.

L'invention sera mieux comprise à la lecture de la description qui va suivre, donnée uniquement à titre d'exemple, et faite en se référant aux dessins annexés sur lesquels :
- la figure 1 est une vue en coupe longitudinale d'un assemblage de tuyaux comprenant un dispositif selon l'invention, la demi-vue supérieure représentant l'assemblage avant compression de la garniture, et la demi-vue inférieure représentant l'assemblage après compression de la garniture,
- la figure 2 est une vue agrandie de la partie cerclée ll de la figure 1,
- la figure 3 est une vue partielle en coupe longitudinale, illustrant la section longitudinale, avant compression, d'une variante du dispositif de la figure 1,
- la figure 4 est une vue analogue à la figure 1, illustrant un assemblage de tuyaux comprenant le dispositif de la figure 3,
- les figures 5 à 7 sont des vues partielles en coupe longitudinale, illustrant chacune la section longitudinale, avant compression, d'une variante du dispositif de la figure 1,
- la figure 8 est une demi-vue en coupe longitudinale d'un deuxième mode de réalisation d'un dispositif selon l'invention, cette vue étant prise dans un plan diamétral passant par un insert de blocage et un taquet de positionnement du dispositif,
- la figure 9 est une vue analogue à la figure 1, illustrant un assemblage de tuyaux muni du dispositif de la figure 8,
- la figure 10 est une vue analogue à la figure 8, illustrant une variante du dispositif de cette figure 8, et
- la figure 11 est une vue en coupe longitudinale d'une variante d'un insert pour un dispositif d'une des figures 8 à 10.

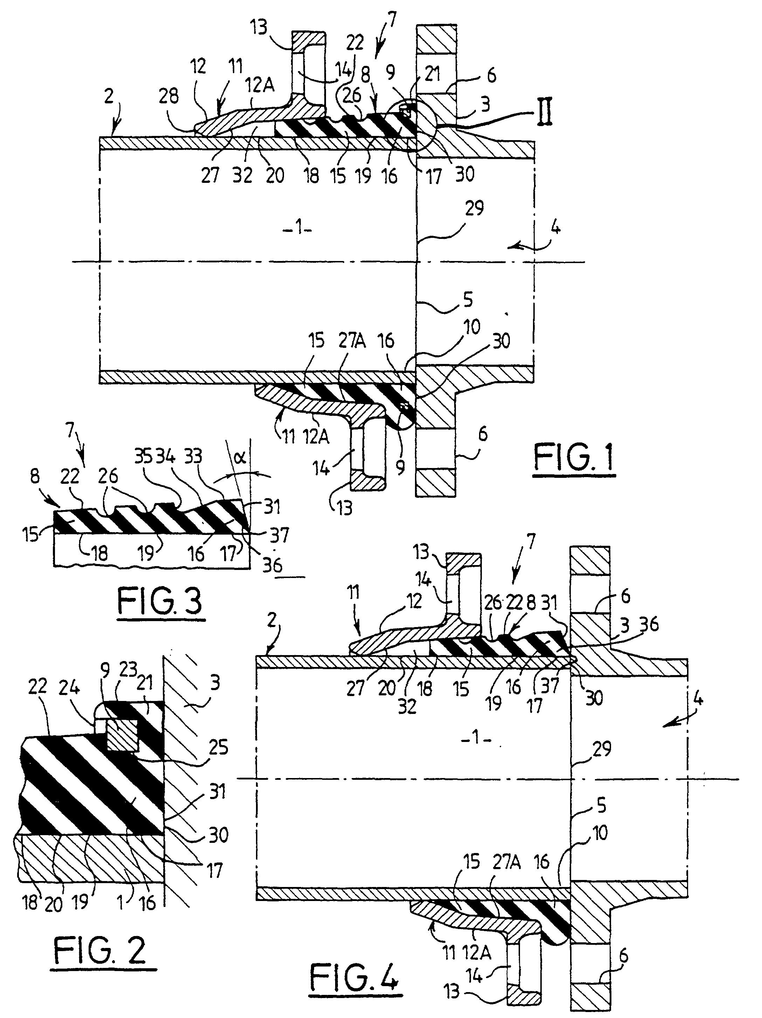

On a représenté sur la demi-vue supérieure de la figure 1 un bout uni 1 ou bout mâle d'un premier tuyau 2 et une bride 3 d'un deuxième tuyau 4 prêts à être assemblés. Ces tuyaux, disposés sensiblement coaxialement, peuvent être en particulier des tuyaux successifs d'une canalisation, notamment en fonte ductile, chaque tuyau comprenant un bout uni 1 à une extrémité et une bride 3 à son autre extrémité.

La bride 3 s'étend radialement depuis l'extrémité arrière 5 (à gauche sur la figure 1) du tuyau 4 et elle est percée d'orifices 6 régulièrement répartis angulairement.

Un dispositif 7, constitué d'une garniture d'étanchéité 8 et d'un anneau métallique continu 9 ,entoure la partie d'extrémité avant 10 (à droite sur la figure 1) du bout uni 1.

Une contrebride 11, entourant le bout uni 1, est initialement placée en arrière de la garniture 8. Cette contrebride 11 comprend une partie arrière 12 sensiblement tronconique, divergente vers l'avant et sensiblement coaxiale au tuyau 2. La partie 12 est prolongée axialement vers l'avant par une partie intermédiaire 12A moins fortement divergente. Sur l'extrémité avant de cette dernière fait saillie radialement vers l'extérieur une collerette ou voile 13 percé d'orifices 14 régulièrement répartis angulairement et placés en regard des orifices 6. Des boulonnages non représentés passent dans les orifices 6 et 14 placés en regard.

La garniture 8 est réalisée en élastomère et comprend un corps 15 annulaire muni à son extrémité avant d'un talon annulaire de section sensiblement rectangulaire 16.

Comme cela apparaît sur la figure 2, la surface radialement intérieure cylindrique 17 du talon 16 prolonge la surface radialement intérieure cylindrique 18 du corps 15, si bien que la surface radialement intérieure 19 de la garniture 8 est cylindrique. Cette surface 19 est en appui contre la surface radialement extérieure 20 du bout uni 1.

Une partie annulaire radialement extérieure 21 du talon 16 dépasse radialement vers l'extérieur depuis la surface radialement extérieure 22 du corps 15. Cette surface 22 est reliée à la surface radialement extérieure 23 du talon 16 par un épaulement radial annulaire 24.

Une gorge annulaire 25 débouchant dans l'épaulement 24 est ménagée dans la partie 21. Le diamètre intérieur de la gorge 25 est sensiblement inférieur au diamètre de la surface 22 à l'avant du corps 15.

La surface 22 du corps 15 a une forme générale tronconique convergente vers l'extrémité arrière de la garniture 8, avec un angle de convergence sensiblement constant par rapport à l'axe de la garniture 8. Trois évidements annulaires identiques 26, de section en demi-cercle et décalés axialement les uns par rapport aux autres, sont ménagés dans la surface 22.

La partie arrière 12 de la contrebride 11 présente intérieurement une surface 27 convergente vers l'extrémité arrière 28 de la contrebride 11. La partie intermédiaire 12A présente une surface intérieure 27A sensiblement conjuguée de la surface 22. Les surfaces 27 et 27A forment une surface de réaction.

On décrira maintenant l'assemblage des deux tuyaux.

En position d'attente, comme représenté sur la demi-vue supérieure de la figure 1, la face intérieure 27A de la partie intermédiaire 12A de la contrebride est placée en contact avec une partie arrière de la surface 22 du corps 15, la garniture 8 n'étant pas comprimée.

La tranche 29 du bout uni 1 est sensiblement plane et en contact avec la surface arrière 30 de la bride 3.

La surface avant 31 du talon 16 est sensiblement plane et la garniture 8 est positionnée sur le bout uni 1 de telle manière que la surface 31 soit en contact avec la surface 30, également plane, de la bride 3. Le jeu axial entre les deux tuyaux 2 et 4 est donc nul ou quasiment nul.

Le diamètre intérieur de l'extrémité arrière 28 de la contrebride 11 est très légèrement supérieur au diamètre extérieur du bout uni 1, le jeu diamétral entre la contrebride 11 et le bout uni 1 étant alors minimal. La surface intérieure 27, 27A de la contrebride 11 délimite une chambre de compression 32 autour du bout uni 1.

Pour assembler de manière étanche les tuyaux 2 et 4, on serre les boulonnages reliant la contrebride 11 à la bride 3, ce qui produit le déplacement de la contrebride 11 vers l'avant.

La demi-vue inférieure de la figure 1 représente les tuyaux 2 et 4 assemblés après serrage des boulonnages. La garniture 8 est alors comprimée entre la bride 3 et la contrebride 11, la surface 22 déformée prenant appui sur la surface de réaction 27, 27A, la surface 19 étant pressée sur la surface 20 du bout uni et la surface 31 du talon 16 prenant appui sur la surface 30 de la bride 3.

Le corps 15 est alors pratiquement entièrement logé dans la chambre d'étanchéité 32, les évidements 26 n'étant alors plus visibles suite à la déformation de l'élastomère.

Les évidements 26 ont foumi des espaces d'expansion de l'élastomère lors de la mise en compression de la garniture 8, en permettant ainsi au corps 15 de se loger pratiquement entièrement dans la chambre 32.

Le voile 13 a donc pu être rapproché au maximum de la bride 3 en permettant ainsi de limiter l'espace libre offert pour l'expansion radiale du talon 16 lors de la mise en compression de l'élastomère. Cette expansion radiale a également été limitée par l'anneau 9 qui retient radialement la partie 21 du talon 16.

Les conditions d'assemblage représentées, c'est-à-dire à jeu axial et diamétral minimaux, sont les plus sévères pour pouvoir assurer une bonne étanchéité. En effet, dans ces conditions, on dispose d'une quantité relativement grande d'élastomère pour un faible espace d'expansion.

Plus précisément, en utilisant des garnitures à corps sans évidement, on constate dans les mêmes conditions, que le corps 15 ne pénètre pas totalement dans la chambre 32. La distance entre le voile 13 et la bride 3 est donc plus importante qu'avec le dispositif de la figure 1, et l'on constate alors un évasement non contrôlé du talon 16 vers l'extérieur, notamment lors de la mise en pression des tuyaux 2 et 4, qui peut entraîner des fuites entre la surface 31 du talon et la surface 30 de la bride.

Au contraire, un tel évasement, lors de la mise sous pression, est ici fortement empêché par l'effet conjugué des évidements 26 et de l'anneau 9 dans le dispositif de la figure 1.

Avec le dispositif de la figure 1, l'étanchéité est donc parfaite à jeu diamétral et/ou axial minimaux, et elle reste satisfaisante dans le cas où ces jeux sont substantiels.

De plus, le dispositif de la figure 1 est particulièrement économique et facile à mettre en oeuvre, puisqu'il comprend une garniture 8 réalisée d'une seule pièce en élastomère à laquelle est adjoint un anneau métallique 9 retenu dans la gorge 25. On a également remarqué que les évidements 26 facilitent d'une part l'assemblage des tuyaux en diminuant le frottement de la garniture sur la surface 27, 27A de la contrebride, et d'autre part le démontage de la contrebride 11, la garniture 8 se décollant plus facilement de celle-ci en présence des évidements 26.

L'anneau 9 est d'une manière plus générale un anneau rigide adapté pour assurer la limitation de l'expansion radiale vers l'extérieur du talon. Il peut également être remplacé par un ressort hélicoïdal annulaire logé dans la gorge 25 qui forme une cavité ouverte, ou noyé dans le talon 16. En variante, le talon peut être surmoulé sur l'anneau rigide ou sur le ressort.

La figure 3 représente une vue partielle en coupe longitudinale d'une variante du dispositif de la figure 1. Ce dispositif est constitué uniquement par une garniture 8, laquelle se distingue de la garniture de la figure 1 uniquement par la forme de son talon 16. Son talon 16 prolonge entièrement le corps 15 de la garniture 8 vers l'avant, sans saillie radiale vers l'extérieur, c'est-à-dire que la surface radialement extérieure 33 de la garniture 8 est de forme générale convergente vers l'arrière avec un angle de convergence sensiblement constant par rapport à l'axe de la garniture 8, de son extrémité arrière à son extrémité avant.

Le flanc avant 34 de l'évidement avant 35 est en pente sensiblement rectiligne, augmentant ainsi la dimension axiale de cet évidement 35 par rapport aux deux autres évidements 26 de section semi-circulaire.

La surface 31 du talon 16 est inclinée par rapport au plan radial d'un angle α sensiblement constant, cette surface 31 étant sensiblement tronconique et convergente vers l'extrémité avant du talon.

Cette dernière caractéristique permet d'obtenir une rigidification de la partie radialement intérieure avant 36 du talon 16 lorsque la surface 31 prend appui sur la surface 30 de la bride 3 comme représenté sur la demi-vue inférieure de la figure 4.

Avant assemblage, comme représenté sur la demi-vue supérieure de la figure 4, le bord radialement intérieur 37 de la surface 31 est seul en contact avec la surface 30 de la bride 3. Lors du serrage des boulonnages reliant la bride 3 et la contrebride 11, la partie 36 du talon 16 se comprime tandis que le reste de la surface 31 vient progressivement en appui contre la surface 30 de la bride 3. Après serrage des boulonnages, il y a donc concentration des contraintes de compression dans la partie 36 du talon 16.

Lors de la mise sous pression des tuyaux 2 et 4, cette partie 36 offre donc une plus grande résistance à la pression du fluide tendant à évaser le talon 16 vers l'extérieur, que dans le cas d'une garniture 8 classique sans organe de limitation d'expansion radiale du talon et avec une surface 31 sensiblement radiale.

De plus, cette configuration de la surface 31 tend à guider la déformation de l'élastomère du talon 16 radialement vers l'intérieur lors du serrage des boulonnages, notamment lorsque le jeu axial entre le bout uni 1 et la bride 3 est non nul. La mesure de l'angle a peut être typiquement de 15°.

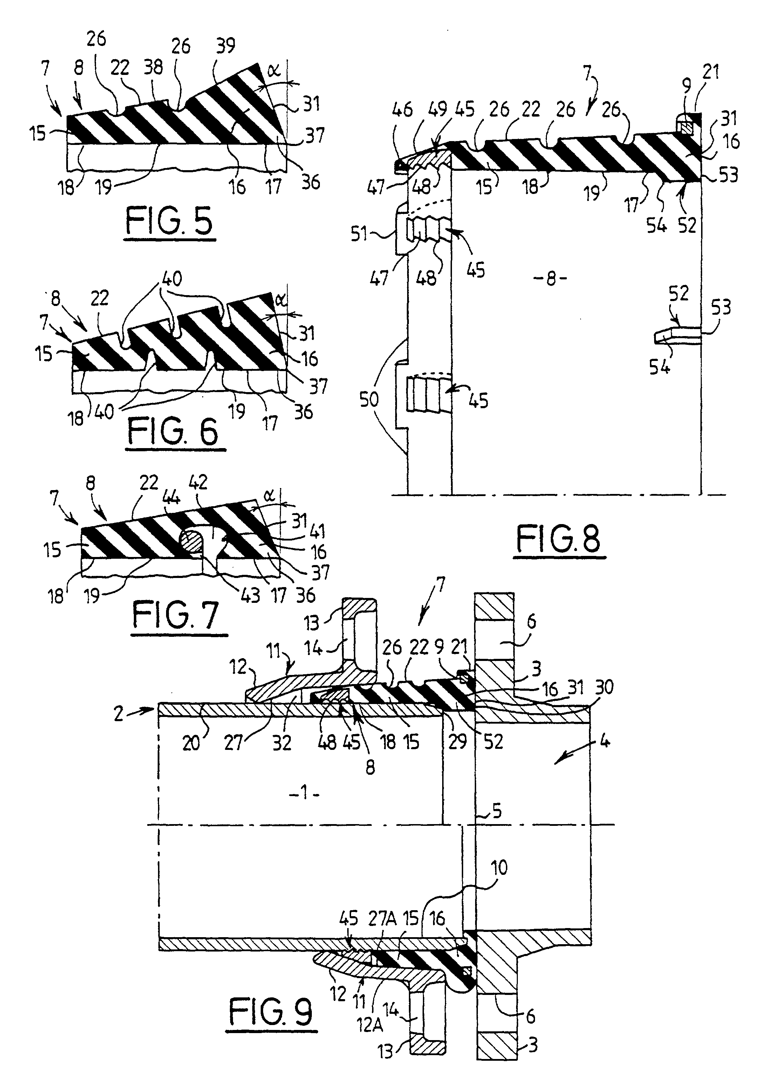

La figure 5 illustre une autre variante du dispositif 7, se distinguant de celle de la figure 3 uniquement en ce que deux évidements 26 sont ménagés sur la surface 22 du corps 15 et en ce que la surface 22 présente depuis l'avant deux parties successives 38 et 39 de formes générales convergentes vers l'arrière et d'angles de convergence par rapport à l'axe de la garniture 8 différents. Ainsi, la partie avant 39 est plus convergente que la partie arrière 38, la jonction entre les deux parties 38 et 39 s'effectuant au niveau de l'évidement 26 avant.

Ces deux parties 38 et 39 sont destinées à prendre appui sur des parties d'inclinaisons à peu près correspondantes, arrière et avant de la surface intermédiaire 27A de la contrebride 11. Lors du serrage des boulonnages, la partie 39 prenant appui sur la surface 27A de la contrebride 11 force le talon 16 radialement vers l'intérieur et participe, après serrage, avec la surface 31 du talon 16, à la limitation de l'expansion radialement vers l'extérieur du talon 16 en améliorant l'étanchéité de la liaison entre le talon 16 et la bride 3.

La figure 6 illustre une autre variante du dispositif, se distinguant de celle de la figure 3 uniquement en ce que des évidements annulaires 40 sont prévus à la fois sur la surface 22 et sur la surface 18 du corps de la garniture 8. Les évidements 40 sont plus profonds et plus étroits que les évidements 26 de la garniture 8 de la figure 2. Les évidements 40 sont décalés axialement les uns par rapport aux autres, la garniture 8 présentant alors une configuration en soufflet.

La figure 7 présente une autre variante du dispositif se distinguant de celle représentée sur la figure 3 en ce qu'un seul évidement annulaire 41 est ménagé dans le corps 15, sur la surface 18 de celui-ci.

Cet évidement 41 définit une cavité annulaire 42 refermée partiellement vers l'arrière par une partie 43 de la garniture 8 formant une lèvre annulaire. Un jonc torique fendu 44 en matière plastique dure ou en métal est logé dans la cavité 42 en prenant appui sur la lèvre 43.

Lors de la mise en compression de la garniture, le jonc 44 est appuyé sur la lèvre 43 par la partie radialement extérieure du corps 15, et il maintient ainsi la lèvre 43 en appui sur la surface 20 du bout uni 1 pour assurer une bonne étanchéité de l'assemblage des tuyaux 2 et 4. Simultanément, l'évidement 41 offre un volume d'expansion à l'élastomère qui vient refermer la cavité 42 autour du jonc 44, en permettant la pénétration quasi complète du corps 15 dans la chambre d'étanchéité 32.

La figure 8 illustre un autre mode de réalisation du dispositif, se distinguant du dispositif 7 de la figure 1 en ce qu'il comprend des inserts de verrouillage métalliques 45 noyés dans un tronçon d'extrémité arrière 46 du corps 15 de la garniture 8.

Ces inserts 45 sont des blocs régulièrement répartis angulairement et reliés périphériquement par le corps 15. Ils présentent une surface radialement intérieure 47 à nu munie de dents 48 d'accrochage, ces dents 48 étant destinées à venir mordre la surface 20 du bout uni 1 pour verrouiller l'assemblage entre les. tuyaux 2 et 4.

La surface radialement extérieure 49 du tronçon 46 est plus fortement convergente que la surface 22 du corps 15.

Des évidements 50 sont ménagés dans la surface frontale arrière 51 du corps 15 entre les inserts 45, de sorte que cette surface 51 présente des décrochements axiaux s'avançant axialement sensiblement jusqu'au niveau de l'extrémité arrière de chaque insert 45.

La surface 17 du talon 16 présente à l'avant des saillies identiques 52 régulièrement réparties angulairement. Ces saillies 52 sont des blocs de section trapézoïdale dont la surface frontale avant 53 prolonge la surface radiale 31 du talon 16 et dont la surface frontale arrière 54 est inclinée radialement vers l'extérieur et axialement vers l'arrière.

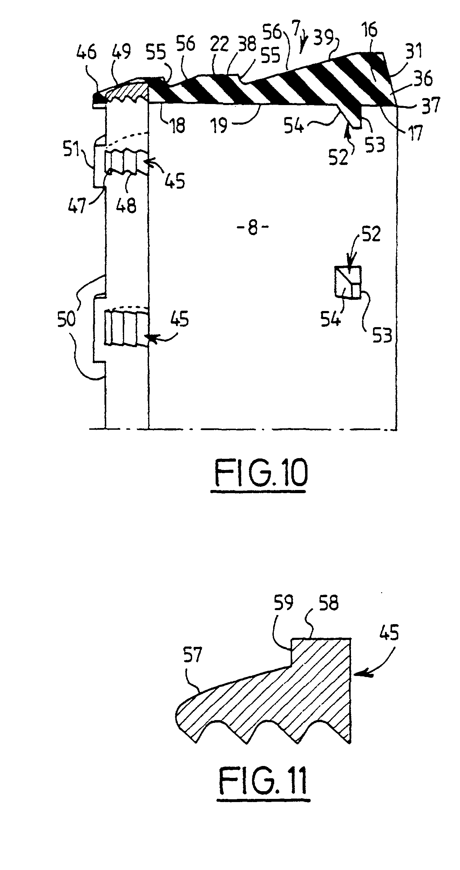

Ces saillies 52 forment des taquets de positionnement qui permettent de préserver automatiquement un écart minimal entre l'extrémité avant 10 du bout uni 1 et la surface 30 de la bride 3 avant serrage des boulonnages, comme représenté sur la demi-vue supérieure de la figure 9. A la différence de la configuration de la figure 1, le jeu axial entre les tuyaux 2 et 4 n'est donc pas minimal.

Lors de l'assemblage (Fig.9), la garniture 8 est enfilée sur le bout uni 1, les surfaces 54 des taquets 52 étant en appui sur l'extrémité avant du bout uni 1, qui est chanfreinée, et la surface 31 du talon 16 et les surfaces 53 des taquets 52 étant en appui sur la surface 30 de la bride 3.

Il est nécessaire de préserver un tel écart minimal avant serrage pour que l'étanchéité puisse être assurée indépendamment du verrouillage. En effet, le verrouillage entre les tuyaux 2 et 4 se produit lors du serrage de la contrebride 11 sur la bride par coopération entre la surface 27 de la contrebride 11 et les surfaces radialement extérieures des inserts 45, qui sont ainsi poussés axialement vers l'avant et radialement vers l'intérieur.

En plus du positionnement automatique de la garniture 8 sur le bout uni 1, les taquets 52 permettent également de corriger un éventuel voilage de la tranche 29 du bout uni 1.

Le fait que les surfaces 54 soient inclinées permet d'optimiser le montage avec la tranche 29 du bout uni 1 chanfreinée ou non.

Ainsi, si la tranche 29 du bout uni 1 est chanfreinée, les surfaces 54 des taquets 52 coopèrent avec le chanfrein de la tranche 29 comme représenté sur la figure 9, le chanfrein de la tranche 29 du bout uni offrant ainsi entre les taquets un espace d'expansion supplémentaire de l'élastomère à jeu diamétral minimal.

La présence des évidements 50 entre les inserts 45 permet d'améliorer l'étanchéité de l'assemblage au niveau des inserts 45 et de faciliter le démontage de l'assemblage.

Ainsi, à jeu diamétral minimal, comme représenté sur la figure 9, ces évidements 50 empêchent la formation de bourrelets de fluage de l'élastomère à l'extérieur de la contrebride 11 (en arrière de celle-ci).

Ces évidements 50 facilitent par suite le démontage de la contrebride 11, qui est plus aisé en l'absence de tels bourrelets de fluage, et augmentent également la possibilité de déviation angulaire du bout uni 1 par rapport à la bride 3.

De plus, ces évidements 50 empêchent l'ondulation de l'élastomère, à jeu diamétral minimal, au niveau de la surface 22 de la garniture et à proximité des inserts 45, une telle ondulation pouvant conduire à des défauts d'étanchéité et provoquer la corrosion des inserts par l'environnement extérieur.

Les évidements 26 facilitent et améliorent l'assemblage verrouillé des tuyaux en limitant le frottement entre le corps de la garniture 8 et la contrebride 11.

La figure 10 représente une demi-vue en coupe longitudinale d'une variante du dispositif de la figure 8, dont le talon 16 et la surface 22 de la garniture ont une configuration semblable à celles de la garniture de la figure 5.

Ainsi, le dispositif de la figure 10 se distingue essentiellement de celui de la figure 8 en ce que la surface 31 du talon 16 est inclinée par rapport au plan radial comme aux Fig. 5 à 7, en ce que la surface 22 de la garniture 8 présente, en avant des inserts, deux parties 38 et 39 d'angles de convergence par rapport à l'axe de la garniture différents, comme à la Fig.5, et en ce que les surfaces avant 53 des taquets 52 sont situées en arrière du bord avant 37 de la surface 31 du talon 16.

De plus, seuls deux évidements annulaires 55 sont ménagés sur la surface 22 du corps 15. La jonction entre les deux parties 38 et 39 s'effectue au niveau de l'évidement 55 avant.

Les flancs avant 56 des évidements 55 sont inclinés de manière sensiblement rectiligne, de sorte que la longueur axiale de ces évidements 55 est supérieure à celle des évidements 26 de la garniture de la figure 8. Le flanc 56 de l'évidement 55 avant prolonge la partie 39 de la surface 22.

De manière analogue à la variante de la figure 4, la surface inclinée 31 du talon 16 permet d'assurer une rigidification du talon lors du serrage de la garniture par la contrebride 11. Cette surface inclinée 31 assure en combinaison avec la partie 39 de la surface 22, la limitation de l'expansion radiale du talon 16 lors de la mise sous pression des tuyaux 2 et 4. De plus, la surface 31 guide l'expansion de l'élastomère radialement vers l'intérieur lors de la mise en compression de la garniture 8.

En outre, l'écart entre les surfaces 53 des taquets 52 et le bord 37 de la surface 31 du talon 16 permet de ménager un espace libre supplémentaire d'expansion de l'élastomère lors de la mise en compression de la garniture 8.

La figure 11 est une vue en coupe longitudinale d'un insert 45 adapté pour être utilisé dans un dispositif semblable à ceux des figures 8 ou 10, dans le cas où le bout uni 1 est en matière plastique.

La surface radialement extérieure 57 de l'insert 45 présente à l'avant une saillie radiale 58 reliée à la surface 57 par un épaulement de butée 59 sensiblement radial. De tels inserts 45 sont destinés à être noyés dans le tronçon 46 d'une garniture 8, comme représenté sur les figures 8 à 10.

L'épaulement 59 de chaque insert 45 d'une telle garniture est destiné à coopérer avec une partie correspondante sensiblement radiale de la surface de réaction 27 de la contrebride 11, lors de la mise en compression de la garniture.

Ainsi, on contrôle le déplacement radial des inserts 45 lors du serrage de la contrebride, en évitant notamment une pénétration radiale trop profonde des inserts dans le bout uni 1 pouvant conduire à une détérioration, voire une perforation, du bout uni 1.

## Revendications

1. Dispositif (7) pour l'assemblage d'un bout uni (1) et d'une bride (3) de deux éléments de canalisation (2,4), comprenant une garniture d'étanchéité à compression axiale (8) en élastomère, cette garniture comprenant un corps (15) d'appui contre une contrebride (11) de compression de la garniture (8) et, à l'avant de ce corps (15) et solidaire de celui-ci, un talon (16) d'appui contre la bride, une surface radialement extérieure (22) du corps étant destinée à prendre appui sur une surface de réaction (27, 27A) de la contrebride (11), une surface radialement intérieure (18) du corps (15) étant destinée à prendre appui sur la surface radialement extérieure (20) du bout uni (1), et une surface d'extrémité avant (31) du talon (16) étant destinée à prendre appui sur la bride (3) pour assurer l'étanchéité de l'assemblage des deux éléments de canalisation (2,4), le corps (15) présentant au moins un évidement (26,35,40,41,26,55) d'expansion de l'élastomère de la garniture comprimée et le dispositif (7) étant pourvu d'un moyen de limitation de l'expansion du talon (16) radialement vers l'extérieur, **caractérisé en ce que** ledit moyen de limitation de l'expansion du talon est un anneau rigide (9) disposé dans une partie radialement extérieure (21) du talon (16) ou un ressort annulaire disposé dans une partie radialement extérieure (21) du talon (16), ou **en ce que** la surface d'extrémité avant (31) du talon présente au moins une partie inclinée qui diverge vers l'arrière pour concentrer, lors de la mise en compression de la garniture (8), les contraintes de compression dans une partie radialement intérieure avant (36) du talon, assurant ainsi la limitation de l'expansion dudit talon radialement vers l'extérieur.

2. Dispositif selon la revendication 1 **caractérisé en ce que** la surface radialement extérieure (22) du corps (15) a une forme générale convergente vers l'extrémité arrière de la garniture (8).

3. Dispositif selon la revendication 1 ou 2, **caractérisé en ce qu'**une partie avant (39;39) de la surface radialement extérieure (22) du corps (15), dépourvue d'évidement, diverge vers l'avant, cette partie étant destinée à prendre appui contre une partie correspondante de la surface de réaction (27,27A) de la contrebride (11) lors de la mise en compression de la garniture (8).

4. Dispositif selon la revendication 3, **caractérisé en ce qu'**au moins deux parties (38,39;38,39) de la surface radialement extérieure (22) du corps, dépourvues d'évidement, divergent vers l'avant, respectivement une partie arrière (16), (38) et ladite partie avant (39), et **en ce que** ladite partie avant (39) diverge plus fortement que la partie arrière (38), ces deux parties étant destinées à prendre appui contre des parties correspondantes de la surface de réaction (27,27A) de la contrebride (11) lors de la mise en compression de la garniture (8).

5. Dispositif selon l'une quelconque des revendications 1 à 4, **caractérisé en ce que** l'évidement d'expansion de l'élastomère de la garniture comprimée est un évidement annulaire (26,35,40,41;26,55) ménagé sur la surface radialement intérieure (18) ou sur la surface radialement extérieure (22) du corps (15).

6. Dispositif selon la revendication 5, **caractérisé en ce que** l'évidement (41) est ménagé sur la surface radialement intérieure (18) du corps (15), cet évidement (41) définissant une cavité (42) refermée au moins partiellement par une partie de la garniture formant une lèvre annulaire (43), et **en ce que** le dispositif (7) comprend un organe (44) de maintien de la lèvre (43) sur la surface radialement extérieure (20) du bout uni (1), cet organe (44) étant logé dans ladite cavité (42).

7. Dispositif selon la revendication 6, **caractérisé en ce que** ledit organe de maintien est un jonc torique fendu (44).

8. Dispositif selon l'une quelconque des revendications 5 à 7, **caractérisé en ce que** l'évidement (40) est ménagé sur la surface radialement intérieure (18) du corps (15), **en ce qu'**au moins un autre évidement annulaire (40) est ménagé sur la surface radialement extérieure (22) du corps (15), et **en ce que** ces deux évidements (40) sont décalés axialement l'un par rapport à l'autre.

9. Dispositif selon l'une quelconque des revendications 1 à 8, **caractérisé en ce que** la surface radialement intérieure (17) du talon (16) présente au moins deux saillies radiales (52) formant des taquets de positionnement axial du dispositif (7) sur le bout uni (1), ces taquets (52) étant destinés à venir en butée contre l'extrémité axiale (10) du bout uni (1) avant la mise en compression de la garniture (8).

10. Dispositif selon l'une quelconque des revendications 1 à 9, **caractérisé en ce qu'**il comprend au moins deux inserts métalliques (45) de blocage, disposés dans un tronçon (46) d'extrémité arrière du corps (15), chaque insert (45) présentant une surface radialement intérieure (47) dont un relief d'accrochage (48) est destiné à prendre appui sur la surface radialement extérieure (20) du bout uni (1) pour verrouiller l'assemblage des deux éléments (2,4) de canalisation lors de la mise en compression de la garniture (8).

11. Dispositif selon la revendication 10, **caractérisé en ce qu'**au moins un évidement frontal arrière (50) d'expansion de l'élastomère de la garniture (8) comprimée est ménagé entre les inserts (45) dans une surface d'extrémité arrière (51) du corps (15).

12. Dispositif selon la revendication 10 ou 11, **caractérisé en ce qu'**au moins un insert de blocage (45) présente sur une surface radialement extérieure (57) une saillie sensiblement radiale (58), cette saillie (58) étant destinée à coopérer avec une partie de butée sensiblement radiale de la surface de réaction (27,27A) de contrebride (11) pour limiter le déplacement radial de l'insert (45) lors de la mise en compression de la garniture (8).

13. Assemblage étanche d'éléments de canalisation, notamment de tuyaux, comprenant un bout uni (1) d'un premier élément de canalisation (2), une bride (3) d'un second élément de canalisation (4), et une contrebride (11) entourant le bout uni (1) et solidaire de la bride (3), **caractérisé en ce qu'**il comprend un dispositif (7) selon l'une quelconque des revendications 1 à 9, ladite surface radialement extérieure (22) du corps (15) prenant appui sur une surface de réaction (27,27A) de la contrebride (11), ladite surface radialement intérieure (18) du corps (15) prenant appui sur la surface radialement extérieure (20) du bout uni (1), et ladite surface d'extrémité avant (31) du talon (16) prenant appui sur la bride (3) en assurant l'étanchéité de l'assemblage des deux éléments de canalisation.

14. Assemblage étanche et verrouillé d'éléments de canalisation, notamment de tuyaux, comprenant un bout uni (1) d'un premier élément de canalisation (2), une bride (3) d'un second élément de canalisation (4), et une contrebride (11) entourant le bout uni (1) et solidaire de la bride (3), **caractérisé en ce qu'**il comprend un dispositif (7) selon l'une quelconque des revendications 10 à 12, ladite surface radialement extérieure (22) de la garniture (8) prenant appui sur une surface de réaction inclinée (27,27A) de la contrebride (11), ladite surface radialement intérieure (18) du corps (15) ainsi que les reliefs d'accrochage (48) des inserts (45) prenant appui sur la surface radialement extérieure (20) du bout uni (1), et ladite surface d'extrémité avant (31) du talon (16) prenant appui sur la bride (3) en assurant l'étanchéité et le verrouillage de l'assemblage des deux éléments de canalisation.

## Patentansprüche

1. Vorrichtung (7) für die Verbindung eines Einsteckendes (1) und eines Flansches (3) von zwei Rohrleitungselementen (2, 4), mit einer Dichtung mit axialer Kompression (8) aus Elastomermaterial, wobei diese Dichtung einen Stützkörper (15) gegen einen Kompressions-Gegenflansch (11) der Dichtung (8) und, im vorderen Bereich des Körpers, und mit diesem fest verbunden, einen Stützsteg (16) gegen den Flansch aufweist, wobei eine radiale Außenfläche (22) des Körpers dazu dient, auf einer Reaktionsfläche (27, 27A) des Gegenflansches (11) zur Anlage zu kommen, wobei eine radiale Innenfläche (18) des Körpers (15) dazu dient, auf der radialen Außenfläche (20) des Einsteckendes (1) zur Anlage zu kommen, und eine vordere Endfläche (31) des Steges (16) dazu dient, auf dem Flansch (3) zur Anlage zu kommen, um die Dichtheit der Verbindung der beiden Rohrleitungselemente (2, 4) zu gewährleisten, wobei der Körper (15) mindestens eine Ausweitungsvertiefung (26, 35, 40, 41; 26, 55) des Elastomermaterials der komprimierten Dichtung aufweist und die Vorrichtung (7) mit einer Begrenzungseinrichtung für die radiale Ausweitung des Steges (16) nach außen versehen ist, **dadurch gekennzeichnet, dass** die Begrenzungseinrichtung der Ausweitung des Steges ein steifer, in einem radialen Außenbereich (21) des Steges (16) angeordneter Ring (9) oder eine ringförmige Feder ist, die in einem radialen Außenbereich (21) des Steges (16) angeordnet ist, oder dadurch, dass die vordere Endfläche (31) des Steges mindestens einen geneigten Bereich aufweist, der nach hinten divergiert, um während des Kompressionsvorgangs (8) der Dichtung die Kompression in einem radialen Innenbereich (36) vor dem Steg zu konzentrieren und somit die Begrenzung des Steges radial nach außen zu gewährleisten.

2. Vorrichtung nach Anspruch 1, **dadurch gekennzeichnet, dass** die radiale Außenfläche (22) des Körpers (15) eine im Allgemeinen zum hinteren Ende der Dichtung (8) konvergente Form aufweist.

3. Vorrichtung nach Anspruch 1 oder 2, **dadurch gekennzeichnet, dass** ein vorderer Bereich (39; 39) der radialen Außenfläche (22) des Körpers (15) ohne Vertiefungen nach vorne divergiert, wobei dieser Bereich dazu dient, gegen einen entsprechenden Bereich der Reaktionsfläche (27, 27A) des Gegenflansches (11) während des Kompressionsvorgangs der Dichtung (8) zur Anlage zu kommen.

4. Vorrichtung nach Anspruch 3, **dadurch gekennzeichnet, dass** mindestens zwei Bereiche (38, 39; 38, 39) der radialen Außenfläche (22) des Körpers ohne Vertiefungen, jeweils ein hinterer Bereich (38) und der vordere Bereich (39), nach vorne divergieren und, dass der vordere Bereich (39) stärker divergiert als der hintere Bereich (38), wobei beide Bereiche dazu dienen, gegen entsprechende Bereiche der Reaktionsfläche (27, 27A) des Gegenflansches (11) während des Kompressionsvorgangs der Dichtung (8) zur Anlage zu kommen.

5. Vorrichtung nach einem der Ansprüche 1 bis 4, **dadurch gekennzeichnet, dass** die Ausweitungsvertiefung des Elastomermaterials der komprimierten Dichtung eine ringförmige Vertiefung (26, 35, 40, 41; 26, 55) ist, die auf der radialen Innenfläche (18) oder auf der radialen Außenfläche (22) des Körpers (15) ausgebildet ist.

6. Vorrichtung nach Anspruch 5, **dadurch gekennzeichnet, dass** die Vertiefung (41) auf der radialen Innenfläche (18) des Körpers (15) ausgebildet ist, wobei diese Vertiefung (41) eine Ausnehmung (42) definiert, die mindestens teilweise durch einen Bereich der Dichtung, der eine ringförmige Lippe (43) bildet, verschlossen wird, und, dass die Vorrichtung (7) eine Halteeinrichtung (44) der Lippe (43) auf der radialen Außenfläche (20) des Einsteckendes (1) aufweist, wobei diese Einrichtung (44) in dem Schacht (42) angeordnet ist.

7. Vorrichtung nach Anspruch 6, **dadurch gekennzeichnet, dass** die Halteeinrichtung ein torischer geschlitzer Ring (44) ist.

8. Vorrichtung nach einem der Ansprüche 5 bis 7, **dadurch gekennzeichnet, dass** die Vertiefung (40) auf der radialen Innenfläche (18) des Körpers (15) ausgebildet ist, dass eine andere ringförmige Vertiefung (40) auf der radialen Außenfläche (22) des Körpers (15) ausgebildet ist, und dass beide Vertiefungen (40) in Bezug auf die andere axial versetzt sind.

9. Vorrichtung nach einem der Ansprüche 1 bis 8, **dadurch gekennzeichnet, dass** die radiale Innenfläche (17) des Steges (16) mindestens zwei radiale Vorsprünge (52) aufweist, die axiale Positionierungsanschläge der Vorrichtung (7) auf dem Einsteckende (1) bilden, wobei die Anschläge (52) dazu dienen, vor der Kompression der Dichtung (8) gegen das axiale Ende des Einsteckendes (1) in Anschlag zu kommen.

10. Vorrichtung nach einem der Ansprüche 1 bis 9, **dadurch gekennzeichnet, dass** sie mindestens zwei metallische Blockiereinsätze (45) aufweist, die in einem hinteren Endabschnitt (46) des Körpers (15) angeordnet sind, wobei jeder Einsatz (45) eine radiale Innenfläche (47) besitzt, deren Befestigungsrelief (48) dazu dient, auf der radialen Außenfläche (20) des Einsteckendes (1) zur Anlage zu kommen, um die Verbindung der beiden Rohrleitungselemente (2, 4) während der Kompression der Dichtung (8) zu verriegeln.

11. Vorrichtung nach Anspruch 10, **dadurch gekennzeichnet, dass** mindestens eine hintere stirnseitige Ausweitungsvertiefung (50) des Elastomermaterials der abgedichteten Dichtung (8) zwischen den Einsätzen (45) in einer hinteren Endfläche (51) des Körpers (15) angeordnet ist.

12. Vorrichtung nach Anspruch 10 oder 11, **dadurch gekennzeichnet, dass** mindestens ein Blockiereinsatz (45) auf einer radialen Außenfläche (57) einen im Wesentlichen radialen Vorsprung (58) aufweist, wobei dieser Vorsprung (58) dazu dient, mit einem im Wesentlichen radialen Bereich des Anschlags der Reaktionsfläche (27, 27A) des Gegenflansches (11) zusammenzuwirken, um die radiale Verschiebung des Einsatzes (45) während des Kompressionsvorgangs der Dichtung (8) zu begrenzen.

13. Dichte Verbindung von Rohrleitungselementen, insbesondere von Rohren, mit einem Einsteckende (1) eines ersten Rohrleitungselements (2), einem Flansch (3) eines zweiten Rohrleitungselements (4) und einem Gegenflansch (11), der das Einsteckende (1) umgibt und fest mit dem Flansch (3) verbunden ist, **dadurch gekennzeichnet, dass** sie eine Vorrichtung (7) nach einem der vorhergehenden Ansprüche 1 bis 9 aufweist, wobei die radiale Außenfläche (22) des Körpers (15) auf einer Reaktionsfläche (27, 27A) des Gegenflansches (11) zur Anlage kommt, die radiale Innenfläche (18) des Körpers (15) auf der radialen Außenfläche (20) des Einsteckendes (1) zur Anlage kommt und die vordere Endfläche (31) des Steges (16) auf dem Flansch (3) zur Anlage kommt, und somit die Dichtheit der Verbindung der beiden Rohrleitungselemente gewährleistet.

14. Dichte und verriegelte Verbindung von Rohrleitungselementen, insbesondere von Rohren, mit einem Einsteckende (1) eines ersten Rohrleitungselements (2), einem Flansch (3) eines zweiten Rohrleitungselements (4) und einem Gegenflansch (11) der das Einsteckende (1) umgibt und fest mit dem Flansch (3) verbunden ist, **dadurch gekennzeichnet, dass** sie eine Vorrichtung (7) nach einem der vorhergehenden Ansprüche 10 bis 12 aufweist, wobei die radiale Außenfläche (22) der Dichtung (8) auf einer geneigten Reaktionsfläche (27, 27A) des Gegenflansches (11) zur Anlage kommt, die radiale Innenfläche (18) des Körpers (15) sowie die Befestigungsreliefs (48) der Einsätze (45) auf der radialen Außenfläche (20) des Einsteckendes (1) zur Anlage kommen und die vordere Endfläche (31) des Steges (16) auf dem Flansch (3) zur Anlage kommt, und somit die Dichtheit und das Verriegeln der Verbindung der beiden Rohrleitungselemente gewährleistet.

## Claims

1. A device (7) for the assembly of a straight spigot (1) and a flange (3) of two pipeline elements (2, 4), comprising an axial compression sealing gasket (8) made of elastomer, this gasket comprising a body (15) for bearing against a compression counter-flange (11) of the gasket (8), and in front of this body (15) and integral therewith a heel (16) for bearing against the flange, a radially outer surface (22) of the body being intended to bear against a reaction surface (27, 27A) of the counter-flange (11), a radially inner surface (18) of the body (15) being intended to bear against the radially outer surface (20) of the straight spigot (1), and a front end surface (31) of the heel (16) being intended to bear against the flange (3) to ensure that the assembly comprising the two pipeline elements (2, 4) is sealed, the body (15) having at least one recess (26, 35, 40, 41; 26, 55) for the elastomer of the compressed gasket to expand into and the device (7) being provided with a means of limiting expansion of the heel (16) radially outwards, **characterised in that** the said means of limiting expansion of the heel is a rigid ring (9) disposed in a radially outer part (21) of the heel (16) or an annular spring disposed in a radially outer part (21) of the heel (16), or **in that** the front end surface (31) of the heel has at least one inclined part which converges towards the rear in order, when the gasket (8) is compressed, to concentrate the compressive loads in a radially inner front part (36) of the heel, thus ensuring that expansion of the said heel radially outwards is limited.

2. A device according to Claim 1, **characterised in that** the radially outer surface (22) of the body (15) has a shape which generally converges towards the rear end of the gasket (8).

3. A device according to Claim 1 or 2, **characterised in that** a front part (38; 39) of the radially outer surface (22) of the body (15), which has no recess, diverges towards the front, this part being intended to bear against a corresponding part of the reaction surface (27, 27A) of the counter-flange (11) when the gasket (8) is compressed.

4. A device according to Claim 3, **characterised in that** at least two parts (38, 39; 38, 39) of the radially outer surface (22) of the body, which have no recess, diverge towards the front, being respectively a rear part (38) and the said front part (39), and **in that** the said front part (39) diverges more pronouncedly than the rear part (38), these two parts being intended to bear against corresponding parts of the reaction surface (27, 27A) of the counter-flange (11) when the gasket (8) is compressed.

5. A device according to any one of Claims 1 to 4, **characterised in that** the recess for the elastomer of the compressed gasket to expand into is an annular recess (26, 35, 40, 41; 26, 55) made in the radially inner surface (18) or the radially outer surface (22) of the body (15).

6. A device according to Claim 5, **characterised in that** the recess (41) is made in the radially inner surface (18) of the body (15), this recess (41) defining a cavity (42) enclosed at least partially by part of the gasket forming an annular lip (43), and **in that** the device (7) comprises a member (44) for keeping the lip (43) in place on the radially outer surface (20) of the straight spigot (1), this member (44) being lodged in the said cavity (42).

7. A device according to Claim 6, **characterised in that** the said member for keeping in place is a split O ring (44).

8. A device according to any one of Claims 5 to 7, **characterised in that** the recess (40) is made in the radially inner surface (18) of the body (15), **in that** at least one other annular recess (40) is made in the radially outer surface (22) of the body (15), and **in that** these two recesses (40) are axially offset with respect to one another.

9. A device according to any one of Claims 1 to 8, **characterised in that** the radially inner surface (17) of the heel (16) has at least two radial projections (52) forming lugs for axial positioning of the device (7) on the straight spigot (1), these lugs (52) being intended to abut against the axial end (10) of the straight spigot (1) before the gasket (8) is compressed.

10. A device according to any one of Claims 1 to 9, **characterised in that** it comprises at least two metal blocking inserts (45) which are disposed in a rear end section (46) of the body (15), each insert (45) having a radially inner surface (47) whereof a hook-type relief (48) is intended to bear against the radially outer surface (20) of the straight spigot (1) in order to lock the assembly of the two pipeline elements (2,4) when the gasket (8) is compressed.

11. A device according to Claim 10, **characterised in that** at least one rear face recess (50) for the elastomer of the compressed gasket (8) to expand into is made between the inserts (45) in a rear end surface (51) of the body (15).

12. A device according to Claim 10 or 11, **characterised in that** at least one blocking insert (45) has on a radially outer surface (57) a substantially radial projection (58), this projection (58) being intended to cooperate with a substantially radial abutment part of the reaction surface (27, 27A) of the counter-flange (11) to limit radial displacement of the insert (45) when the gasket (8) is compressed.

13. A sealed assembly of pipeline elements, in particular pipes, comprising a straight spigot (1) of a first pipeline element (2), a flange (3) of a second pipeline element (4) and a counter-flange (11) surrounding the straight spigot (1) and integrally formed with the flange (3), **characterised in that** it comprises a device (7) according to any one of Claims 1 to 9, the said radially outer surface (22) of the body (15) bearing against a reaction surface (27, 27A) of the counter-flange (11), the said radially inner surface (18) of the body (15) bearing against the radially outer surface (20) of the straight spigot (1), and the said front end surface (31) of the heel (16) bearing against the flange (3), ensuring that the assembly of the two pipeline elements is sealed.

14. A sealed and locked assembly of pipeline elements, in particular pipes, comprising a straight spigot (1) of a first pipeline element (2), a flange (3) of a second pipeline element (4) and a counter-flange (11) surrounding the straight spigot (1) and integrally formed with the flange (3), **characterised in that** it comprises a device (7) according to any one of Claims 10 to 12, the said radially outer surface (22) of the gasket (8) bearing against an inclined reaction surface (27, 27A) of the counter-flange (11), the said radially inner surface (1B) of the body (15) and the hook-type reliefs (48) of the inserts (45) bearing against the radially outer surface (20) of the straight spigot (1), and the said front end surface (31) of the heel (16) bearing against the flange (3), ensuring that the assembly of the two pipeline elements is sealed and locked.
